# EUROPEAN PATENT SPECIFICATION

(11) **EP 1 289 208 B1**
(45) Date of publication and mention of the grant of the patent: **31.10.2007**
(21) Application number: 02078112.6
(22) Date of filing: 29.07.2002
(51) Int. Cl.: H04L 12/56

(54) **A method of controlling data routing on a network**
Eine Verfahren zur Datenwegewahlsteuerung in einem Netz
Une méthode de contrôle de routage de data sur un réseau

(30) Priority: 31.08.2001 GB 0121136
(43) Date of publication of application: 05.03.2003
(73) Proprietor: ROKE MANOR RESEARCH LIMITED, Romsey, Hampshire SO51 0ZN (GB)
(72) Inventor: Edwin Richard, Southampton, Hampshire,SO15 4HU (GB); Reeve Andrew, Winchester, Hampshire, SO22 5AH (GB)
(74) Representative: Payne, Janice Julia

(56) References cited:
- EP-A- 0 714 192
- US-B1- 6 262 974
- PEYRAVIAN M ET AL: "Connection preemption: issues, algorithms, and a simulation study" 7 April 1997 (1997-04-07), INFOCOM '97. SIXTEENTH ANNUAL JOINT CONFERENCE OF THE IEEE COMPUTER AND COMMUNICATIONS SOCIETIES. DRIVING THE INFORMATION REVOLUTION., PROCEEDINGS IEEE KOBE, JAPAN 7-11 APRIL 1997, LOS ALAMITOS, CA, USA,IEEE COMPUT. SOC, US, PAGE(S) 143-151 , XP010252021 ISBN: 0-8186-7780-5 * page 143, left-hand column, line 17 - right-hand column, line 25 * * page 144, left-hand column, line 4 - line 7 * * page 144, left-hand column, line 39 - line 44 * * page 145, left-hand column, line 31 - right-hand column, line 17 *

## Description

This invention relates to a method of controlling data routing on a network.

In a network, for example a telephone network, paths are created with different priorities. In general, paths are allocated different priorities according to their status and the action required, e.g. a connect priority, reconnect priority and holding priority. Where a link in a high priority path fails, it is important to reconnect it as soon as possible. Networks are often set up with redundant links that can be taken over by high priority paths immediately. However, this results in the under utilisation of the network components and reduces the total amount of traffic which can be sent. A system has been proposed in which a low priority path is taken over to enable a failed link in a high priority path to be reconnected. However, this relies on the fault being spotted by a supervisor, a request to the nearest lower priority path being sent to release that path, then the high priority path being connected through the link requested. This is time consuming and rarely the most efficient use of resources.

Another system is described in US 6,151,304 in which a network is set up to the extent that there is no contention over routes, then a parallelisation mechanism is applied to further reduce contention by permitting multiple demands to be routed in parallel. However, this system relies on pre-computing a suitable route in the case of failure, then instructing it to be set up if a failure occurs. However, if the path is pre-computed then the pre-computed restoration path needs to be updated whenever there is a change in the network.

Peyravian M et al "Connection pre-emption: issues algorithms, and a simulation study" 7 April 1997, INFOCOM ' 97, IEEE COMPUT. SOC, US pp 143-151 XP010252021 ISBN: 0-8186-7780-5 describes a method of connection pre-emption where the connection is allocated a priority level and a high priority connection is given precedence over a lower priority connection in the event of pre-emption.

US6262974 describes allocating different connection priorities, such as quality of service, maximum error, or loss probability, which are used in the path selection process to determine feasibility of a potential route.

In accordance with the present invention a method of controlling data path routing in a network comprises assigning to a path a priority for connection; calculating a route for the path as a series of links between nodes; allocating resources to the path at each link that it traverses, taking the resources from lower priority paths if required; monitoring for failure of any link; monitoring for a connect request according to connect priority of the new path; on occurrence of a failure or connect request, searching for a suitable route with free capacity; taking over at each link the resources of the path with the lower priority, such that the path is re-connected, or the new path is connected; wherein the method further comprises assigning to the path a priority for reconnection and holding; disconnecting any path using the link resulting in path failure according to the holding priority of the path; if no suitable route has free capacity, then searching for a route which has sufficient capacity allocated to paths with a lower holding priority than the reconnect priority of the path where the link has failed, or the connect priority of the new path; and checking that a path with a lower priority whose resources are taken has the lowest holding priority of any such path on each link.

The present invention is able to maintain a high utilisation of the system, whilst being able to take over link resources from a lower priority path as soon as a fault develops on a high priority path. Where a failure has occurred, the paths may revert to their original routes after the failure has been rectified, thereby minimising the down time for the lower priority path as well as providing an effective method of keeping high priority paths connected. The present invention minimises the number of redundant components required and allows much higher utilisation of the network, without the overhead involved in pre-computing the possible alternatives in case of failure.

Low priority paths are able to use capacity in the network whilst there is no failure condition on the provisioned paths, but these low priority paths are taken over if their capacity is required to restore a high priority path. By doing the calculation of the restoration path at failure time the best restoration path at the time of failure can be calculated.

The invention is applicable to various networks, such as multi-protocol label switching networks, asynchronous transfer mode networks, synchronous digital hierarchy networks and voice networks, but preferably, the network comprises an automatically switched optical network.

Preferably, each priority is allocated a value between 1 and 4.

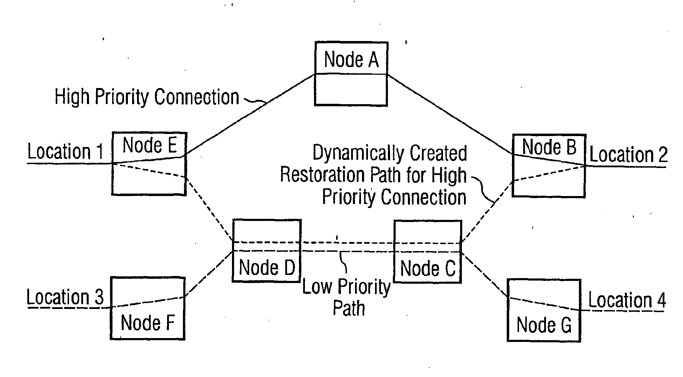

An example of a method of controlling data routing on a network according to the present invention will now be described with reference to the accompanying drawing in which:-
Figure 1 illustrates a network in which the paths are routed by a method according to the invention.

In a network having nodes and links between the nodes, a path is set up between a start and end point. The path is allocated a set of priorities for connection, i.e. set up priority during service provisioning; re-connection, i.e. set up priority during failure recovery; and holding, i.e. priority once established. The priorities for each state are preferably set to an integer value between 1 and 4, where 1 is the highest priority, although other systems are equally appropriate. Before taking over link resources between two nodes to restore a path after failure, the system applies the method of the present invention to assess first whether there is a link with free capacity, then whether there is a link with paths with a lower holding priority than the re-connect priority of the path requiring restoration; and if this is true, that these paths have the lowest holding priority of any possible such paths to reconnect the path. Only having satisfied this third requirement, does the system take over the link resources in question to disconnect the lower priority path and allow the higher priority path to reconnect or to connect through that link.

The present invention allows for link resources allocated to lower priority paths to be taken over to enable restoration of higher priority paths if a failure occurs, or by higher priority paths being connected when subscriber requirements change. The system also supports arbitration between different path connections if there is competition over resources when the paths are first set-up. When arbitrating between paths, only one of each path's priority attributes is used. Which one depends on the path's state. Thus during initial set-up, the connect priority is used. Once the path has been established, the holding priority is used and in the event that restoration is required, the re-connect priority is used.

By way of example, a network that supports connections of a single fixed bandwidth is described. In such a network, link capacity and utilisation can be specified as a number of paths. However, the invention can also be applied to networks that support paths with variable bandwidths. Each node holds the following database for each of its links.

| | |
|---|---|
| Link Capacity | total number of connections that the link can support |
| Priority 1 utilisation | number of established connections at holding priority 1 |
| Priority 2 utilisation | number of established connections at holding priority 2 |
| Priority 3 utilisation | number of established connections at holding priority 3 |
| Priority 4 utilisation | number of established connections at holding priority 4 |

This information is flooded throughout the network using a link state protocol. Note that priority level utilisation information is only distributed for those priorities that have established connections. This optimises the signalling traffic volume.
In the following the term pre-empt is defined to mean the act of taking the link resources currently allocated to a path (the pre-empted path) and disconnecting that path, with the intention of re-allocating those resources to another path (the pre-empting path).

When a connection is initially set up or restored, the method applies the following procedures in support of a connection priority. A routing algorithm implements the following rules:
1. A path is only pre-empted if no path with free capacity, and which satisfies any constraints or requirements specified, is found;
2. If a path is pre-empted, then the path pre-empted must have a lower holding priority than the connect or re-connect priority of the new path;
3. If a path is pre-empted, then it must have the lowest possible holding priority of all established paths on that link.

The routing algorithm finds the optimal route obeying these rules by performing iteratively a basic routing algorithm until it is successful, at each iteration increasing the scope of existing connections that can be pre-empted, as described by the pseudo code in Table 1 below. By way of example, in the algorithm below, the basic algorithm is the constraint shortest path first algorithm. However, other basic algorithms can be used such as widest shortest path first.

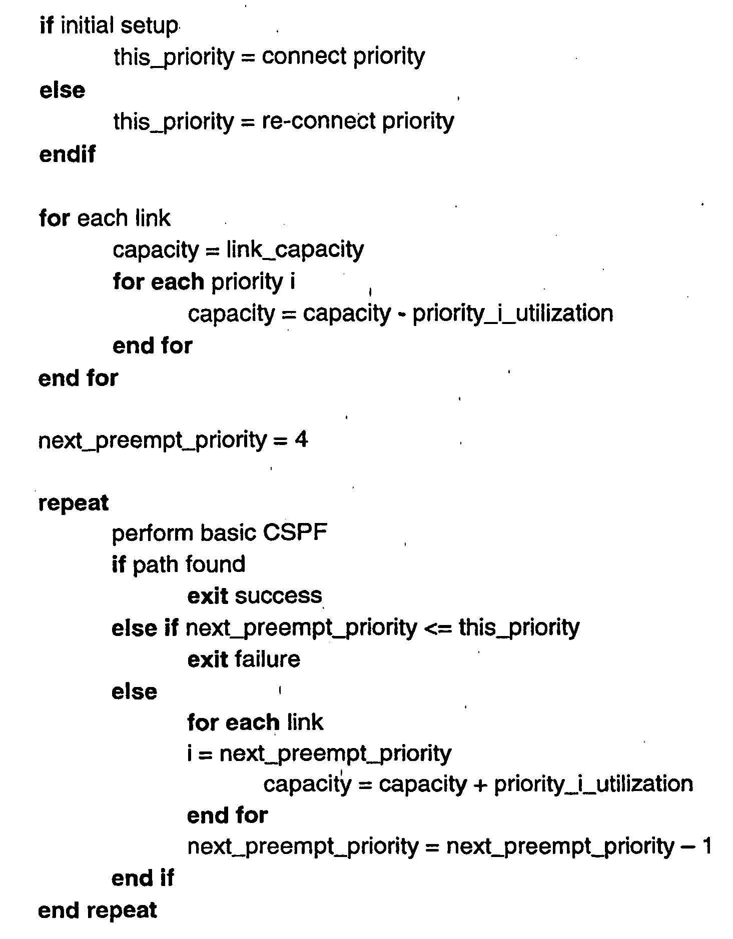

A specific example of a network in which the method of the present invention is applied is illustrated in Fig. 1. This shows a network having 7 nodes, A to G and four locations 1 to 4. A connection path is set up between locations 1 and 2, running through nodes E, A and B using a known routing algorithm, such as constrained shortest path first (CSPF). A second path is set up between locations 3 and 4, running through nodes F, D, C and G. The priorities allocated to this second path are lower than those allocated to the first path. In this example, the links only have the resources to create one path, so if there is a failure of the link along the path between 1 and 2, then a restoration path is dynamically created between 1 and 2 via nodes D and C, and the path between 3 and 4 is severed. Before taking over the resources of the link between D and C, the system applies the method of the present invention to assess first whether there is a route across links with free capacity, then whether there is a route across links carrying paths with a lower holding priority than the re-connect priority of the path from 1 to 2; and when doing this, it is ensured that these links carry paths with the lowest holding priority of any possible such links to reconnect the path from 1 to 2 by first considering resources allocated to paths with the lowest holding priority, then the next lowest holding priority and so on. At each link where existing paths have to be pre-empted to free resources, the ones with the lowest holding priority of any possible paths are pre-empted.

The present invention is applicable to any type of network that supports paths or connections, but is particularly suitable for increasing efficiency of utilisation of automatically switched optical networks.

## Claims

1. A method of controlling data path routing in a network, the method comprising assigning to a path a priority for connection; calculating a route for the path as a series of links between nodes; allocating resources to the path at each link that it traverses, taking the resources from lower priority paths if required; monitoring for failure of any link; monitoring for a connect request according to connect priority of the new path; on occurrence of a failure or connect request, searching for a suitable route with free capacity; taking over at each link the resources of the path with the lower priority, such that the path is re-connected or the new path is connected; wherein the method further comprises assigning to the path a priority for reconnection and holding; disconnecting any path using the link resulting in path failure according to the holding priority of the path; if no suitable route has free capacity, then searching for a route which has sufficient capacity allocated to paths with a lower holding priority than the reconnect priority of the path where the link has failed, or the connect priority of the new path; and checking that a path with a lower priority whose resources are taken has the lowest holding priority of any such path on each link.

2. A method according to claim 1, wherein the network comprises an automatically switched optical network.

3. A method according to claim 1 or claim 2, wherein each priority is allocated a value between 1 and 4.

## Patentansprüche

1. Verfahren zur Steuerung der Datenwegewahl in einem Netz, wobei das Verfahren umfasst: Zuweisen einer Priorität für den Verbindungsaufbau zu einem Weg; Berechnen einer Route für den Weg als eine Reihe von Übertragungsstrecken zwischen Knoten; Zuordnen von Ressourcen zu dem Weg an jeder Übertragungsstrecke, welche er durchquert, wobei, falls erforderlich, die Ressourcen von Wegen niedrigerer Priorität in Anspruch genommen werden; Überwachen hinsichtlich eines Ausfalls irgendeiner Übertragungsstrecke; Überwachen hinsichtlich einer Verbindungsaufbauanforderung entsprechend einer Verbindungsaufbau-Priorität des neuen Weges; beim Auftreten eines Ausfalls oder einer Verbindungsaufbauanforderung, Suchen nach einer geeigneten Route mit freier Kapazität; Übernehmen der Ressourcen des Weges mit der niedrigeren Priorität an jeder Übertragungsstrecke, derart, dass die Verbindung des Weges wiederhergestellt wird oder die Verbindung des neuen Weges aufgebaut wird; wobei das Verfahren ferner umfasst: Zuweisen einer Priorität für Verbindungswiederherstellung und Halten zu dem Weg; Trennen eines beliebigen Weges unter Verwendung der Übertragungsstrecke, die einen Wegausfall zur Folge hat, entsprechend der Halte-Priorität des Weges; falls keine geeignete Route freie Kapazität hat, dann Suchen nach einer Route, bei welcher ausreichend Kapazität Wegen mit einer Halte-Priorität zugeordnet ist, die niedriger ist als die Verbindungswiederherstellungs-Priorität des Weges, wo die Übertragungsstrecke ausgefallen ist, oder als die Verbindungsaufbau-Priorität des neuen Weges; und Prüfen, ob auf jeder Übertragungsstrecke ein Weg mit einer niedrigeren Priorität, dessen Ressourcen in Anspruch genommen werden, die niedrigste Halte-Priorität unter allen solchen Wegen hat.

2. Verfahren nach Anspruch 1, wobei das Netz ein automatisch vermitteltes optisches Netz umfasst.

3. Verfahren nach Anspruch 1 oder Anspruch 2, wobei jeder Priorität ein Wert zwischen 1 und 4 zugeordnet ist.

## Revendications

1. Méthode de contrôle de routage de chemin de données dans un réseau, la méthode comprenant les étapes consistant à attribuer à un chemin une priorité de connexion ; calculer une route pour le chemin sous la forme d'une série de liaisons entre des noeuds ; affecter des ressources au chemin au niveau de chaque liaison qu'il traverse, en employant les ressources de chemins à priorité inférieure si nécessaire ; surveiller une défaillance d'une quelconque liaison ; surveiller une demande de connexion en fonction d'une priorité de connexion du nouveau chemin ; en cas de défaillance ou de demande de connexion, rechercher une route appropriée ayant une capacité disponible ; adopter au niveau de chaque liaison les ressources du chemin ayant la priorité inférieure, de sorte que le chemin est reconnecté ou que le nouveau chemin est connecté ; dans laquelle la méthode comprend en outre les étapes consistant à attribuer au chemin une priorité de reconnexion et de maintien ; déconnecter tout chemin utilisant la liaison provoquant une défaillance de chemin en fonction de la priorité de maintien du chemin ; si aucune route appropriée n'a de capacité disponible, rechercher une route qui a une capacité suffisante affectée à des chemins ayant une priorité de maintien inférieure à la priorité de reconnexion du chemin dans lequel la liaison est défaillante, ou à la priorité de connexion du nouveau chemin ; et vérifier qu'un chemin ayant une priorité inférieure, dont les ressources sont employées, a la priorité de maintien la plus basse parmi tous les chemins sur chaque liaison.

2. Méthode selon la revendication 1, dans laquelle le réseau est constitué d'un réseau optique à commutation automatique.

3. Méthode selon la revendication 1 ou la revendication 2, dans laquelle une valeur comprise entre 1 et 4 est affectée à chaque priorité.
